# EUROPÄISCHE PATENTSCHRIFT

(11) **EP 1 426 667 B1**
(45) Veröffentlichungstag und Bekanntmachung des Hinweises auf die Patenterteilung: **20.12.2006**
(21) Anmeldenummer: 03018829.6
(22) Anmeldetag: 19.08.2003
(51) Int. Cl.: F16K 31/04, F16H 19/00

(54) **Stellantrieb**
Actuating drive
Mecanisme de commande

(30) Priorität: 06.12.2002 DE 10257082
(43) Veröffentlichungstag der Anmeldung: 09.06.2004
(73) Patentinhaber: Techem Energy Services GmbH, 65760 Eschborn (DE)
(72) Erfinder: Klein, Joachim, 64807 Dieburg (DE); Alwon, Hartmut, 90574 Rosstal (DE)
(74) Vertreter: KEIL & SCHAAFHAUSEN Patentanwälte

(56) Entgegenhaltungen:
- DE-A- 2 259 146
- DE-A- 3 827 000
- DE-A- 19 916 609
- DE-U- 9 216 040

## Beschreibung

Die Erfindung betrifft einen Stellantrieb, insbesondere für ein Heizkörperventil, mit einem Antriebsmotor, der über ein zwischengeschaltetes Untersetzungsgetriebe mit einem Rotations-Linear-Umsetzungstrieb verbunden ist, über den ein zumindest zeitweise mit Kräften beaufschlagtes Stellglied, insbesondere ein Ventilstößel, betätigbar ist, entsprechend dem Oberbegriff des Anspruchs 1.

Bei Heizkörperventilen unterscheidet man zwischen solchen mit einem thermostatischen Antrieb, bei welchem mittels eines Ausdehnungselementes temperaturabhängig ein mit dem Ventilteller verbundenes Stellglied in Position gehalten wird, und Heizkörperventilen, bei denen der thermostatische Antrieb durch einen bspw. elektromotorischen Antrieb ersetzt wurde. Bei beiden Heizkörperventilen wirken auf das Stellglied einerseits die Kraft einer Druckfeder, die den Ventilteller in Schließrichtung beaufschlagt und zusätzlich Kräfte aus dem Differenzdruck in der Heizleitung. Die maximale Größe dieser im Betrieb auf das Stellglied wirkenden Kräfte ist daher bekannt. Um den Ventilteller in einer bestimmten Ventilöffnungsstellung zu halten, muss folglich eine kontinuierliche Kraft aufgebracht werden, die der Kraft der Druckfeder und dem Differenzdruck entgegenwirkt. Dies erfolgt bei Heizkörperventilen mit thermostatischem Antrieb durch das Ausdehnungselement. Bei Heizkörperventilen mit bspw. elektromotorischem Antrieb sollte das Halten des Ventiltellers in der gewünschten Position möglichst ohne Aufwendung zusätzlicher Energie erfolgen, da die Betriebsdauer von den häufig batteriebetriebenen Heizkörperventilen ansonsten nur minimal wäre.

Hierzu ist bspw. aus der DE-OS 36 42 113 eine Betätigungsvorrichtung für ein Heizkörperventil bekannt, bei welchem die Rotation eines elektrischen Antriebsmotors über einen Spindeltrieb in eine Translationsbewegung eines mit einem Ventilteller verbundenen Stellglieds übersetzt wird. Der Spindeltrieb ist dabei selbsthemmend mit einem Flankenwinkel ausgelegt, der kleiner als der wirkende Reibwinkel ist.

Auf diese Weise werden durch die auf das Stellglied wirkenden Kräfte der Druckfeder und des Differenzdrucks keine Momente in den Antriebsmotor weitergeleitet, so dass von dem Motor keine Kräfte zum Halten einer bestimmten Ventilstellung aufgebracht werden müssen. Selbst nach Abnehmen der Motoreinheit bleibt der Ventilteller in seiner Position und kann bspw. von Hand bedient werden.

Der Einsatz eines derartigen selbsthemmenden oder zumindest stark hemmenden Spindeltriebs hat jedoch erhebliche energetische Nachteile. Der Wirkungsgrad eines selbsthemmenden Spindeltriebs ist in Hubrichtung grundsätzlich auf maximal 50 % begrenzt. Es muss daher selbst bei einer Bewegung des Ventiltellers in Richtung der Kraft der Druckfeder und des Differenzdrucks von dem Antriebsmotor Energie aufgewendet werden.

Um diesen nachteiligen Effekt zu mindern, wird in der DE 39 05 414 C1 ein Heizungsventil mit einem elektromotorischen Regulierantrieb vorgeschlagen, bei dem mit einer zusätzlichen Druckfeder, die in Schließrichtung des Ventiltellers wirkt, das Kräfteniveau für den Spindel-Stellantrieb verringert wird. Da die Federkräfte jedoch allenfalls in einem einzigen Punkt des Stellhubs genau gleich sein können, verbleibt im übrigen Stellbereich des Ventiltellers immer eine resultierende Kraft. Folglich muss auch bei diesem bekannten Antrieb eine selbsthemmende Spindel eingesetzt werden, um den Ventilteller im Ruhezustand des Antriebsmotors in seiner Position zu halten. Dies gilt insbesondere dann, wenn mit dem gleichen Stellantrieb Heizkörperventile von verschiedenen Herstellern ausgerüstet werden sollen.

Vor allem bei batteriebetriebenen Geräten ist der Einsatz einer selbsthemmenden Spindel nachteilig, da die Batterielebensdauer dadurch gesenkt wird, dass sowohl zum Öffnen als auch zum Schließen des Ventils zusätzliche Kraft zur Überwindung der selbsthemmenden Wirkung der Spindel von dem Antriebsmotor aufgebracht werden muss. Die fehlende Akzeptanz für die in der Praxis häufig erforderlichen Batteriewechsel haben daher in der Vergangenheit eine weite Verbreitung von Heizkörperventilen mit elektromotorischen Antrieben verhindert.

Weiter wurde versucht, den Energieverbrauch eines derartigen Antriebs dadurch zu reduzieren, dass der Spindeltrieb gerade im Grenzbereich zur Selbsthemmung ausgelegt ist, um zumindest die möglichen 50 % Übertragungswirkungsgrad zu erreichen. Aufgrund von Reibwertschwankungen können hierbei jedoch gelegentlich Restmomente von dem Stellglied in die nachgeschaltete Antriebseinheit geleitet werden, wodurch sich der Ventilteller aus seiner voreingestellten Position verschieben kann.

Aus der gattungsgemäßen DE 92 16 040 U1 ist ein elektrisch betätigbares Ventil bekannt, bei welchem lediglich zum Umschalten Energie benötigt wird. Dies soll über ein selbsthemmendes Getriebe oder einen mit Permanentmagneten bestückten Elektromotor erfolgen, dessen Anker nur mit entsprechend hoher Kraft gedreht werden kann. Die Auswahl geeigneter Motoren, die eine ausreichend hohe Kraft erfordern, um gedreht zu werden, ist jedoch schwierig, insbesondere, wenn der Energiebedarf des Motors für einen Batteriebetrieb minimiert werden muss.

Weiter wird in der DE 2 259 146 A eine Vorrichtung zum Betätigen eines Ventils beschrieben, bei welcher die Ventilspindel mittels eines Planetengetriebes von einem Elektromotor angetrieben wird. Dem Motor ist eine durch einen Magnet betätigbare Bremse zugeordnet, die mit einem Zinken in die Verzahnung eines Planetenträgers eingreifen kann. Bei dieser bekannten Vorrichtung muss zum Verstellen und/oder Fixieren der Ventilspindel Energie für den Motor und zusätzlich auch die Betätigung der Bremse aufgebracht werden.

Aufgabe der Erfindung ist es daher, einen Stellantrieb der eingangs genannten Art bereitzustellen, bei dem das Stellglied ohne Aufbringen von zusätzlicher Energie im Wesentlichen in einer voreingestellten Position gehalten werden kann und dessen Energieverbrauch bei Betätigung des Stellantriebs verringert wird.

Diese Aufgabe wird mit den Merkmalen des Anspruchs 1 gelöst. Der Erfindung liegt dabei der Gedanke zugrunde, die erforderliche Haltekraft für das Stellglied nicht durch einen stark hemmenden oder gar selbsthemmenden Rotationslinearumsetzungstrieb zu realisieren, auf den vergleichsweise hohe Kräfte wirken, sondern die erforderlichen Brems- oder Haltemomente motorseitig aufzubringen, die durch das zwischengeschaltete Untersetzungsgetriebe deutlich geringer sind als die Kräfte, die hierzu an dem Rotations-Linear-Umsetzungstrieb notwendig wären. So ist es bspw. möglich, dass die aus den Vorzugsstellungen des von einem Permanentmagneten und dem Anker gebildeten magnetischen Kreises erzeugten Rastmomente im Antriebsmotor ausreichend groß sind, so dass die erforderlichen Brems- oder Haltemomente durch den Antriebsmotor selbst aufgebracht werden. Zusätzlich hierzu ist erfindungsgemäß an dem Antriebsmotor oder motorseitig an dem Untersetzungsgetriebe eine Einrichtung zum Erzeugen eines zusätzlichen Brems- oder Haltemoments vorgesehen, die eine in Abhängigkeit der Drehzahl des Antriebsmotors öffnende Bremse ist, und/oder die derart gestaltet ist, dass sie eine periodische Modulation des Brems- oder Haltemoments bewirkt. Das Stellglied kann dadurch ohne das Aufbringen zusätzlicher Energie durch den Antriebsmotor sicher in seiner voreingestellten Position gehalten werden. Gleichzeitig wird die zur Betätigung des Stellglieds erforderliche Energie deutlich gesenkt. Der Rotations-Linear-Umsetzungstrieb kann dabei so gestaltet werden, dass sein Gesamtwirkungsgrad bei über 80 % liegt, so dass gegenüber dem maximal möglichen Wirkungsgrad eines selbsthemmenden Spindeltriebs von 50 % eine Steigerung des Wirkungsgrads um mindestens den Faktor 1,6 erreicht wird. In gleichem Maß steigt dadurch auch die Lebensdauer der bspw. zur Energieversorgung des Antriebsmotors verwendeten Batterien.

Vorzugsweise ist die Einrichtung zum Erzeugen des Brems- oder Haltemoments, die eine periodische Modulation des Brems- oder Haltemoments bewirkt, so gestaltet, dass in der Motorwelle eine Ausnehmung vorgesehen ist, in welche eine über eine Druckfeder beaufschlagte Rastkugel oder Rastrolle eingreift. In gleicher Weise kann in der Welle ein Rastmagnet eingebracht sein, der bei Annäherung an einen weiteren in der Nähe der Welle positionierten Magneten eine Haltekraft erzeugt.

Nach einer weiteren Ausführungsform der Erfindung kann die drehzahlbedingt öffnende Bremse eine sich durch die Fliehkraft öffnende Federbremse sein, bei der ein erstes Ende einer Feder exzentrisch auf einer mit der Welle umlaufenden Scheibe befestigt ist, während das andere Ende der Feder gegen ein feststehendes Element vorgespannt ist, welches der Wellenachse angenähert ist. Durch eine Rotation der Welle mit der Scheibe wird das freie Ende der Feder von dem feststehenden Element abgehoben und die Bremse somit gelöst.

Neben der deutlichen Verbesserung des Gesamtwirkungsgrads des Stellantriebs liegt ein weiterer Vorteil darin, dass der gesamte Antrieb freier gestaltet werden kann. Wenn auf einen stark hemmenden oder gar selbsthemmenden Spindeltrieb verzichtet werden kann, sind bspw. besonders flache Bauformen darstellbar, bei denen die Achse des Antriebsmotors und die Betätigungsrichtung des Stellglieds senkrecht zueinander stehen. Zudem kann der Rotations-Linear-Umsetzungstrieb bspw. mit einer nichtlinearen, progressiven oder degressiven Übersetzung gestaltet werden.

Darüber hinaus ermöglicht die erfindungsgemäße Gestaltung des Stellantriebs auch die Wiedergewinnung eines Teils der bei einer Betätigung des Stellglieds gegen die Federkraft aufgebrachten Energie, da diese das Stellelement selbsttätig bewegt, wenn die Brems- oder Haltemomente einer gesteuerten Bremseinheit weggeschaltet oder bei einer in Abhängigkeit der Drehzahl des Antriebsmotors öffnenden Bremse durch einen kurzen Impuls überwunden werden. Mit entsprechender Ansteuerung des Antriebsmotors können auf diese Weise hierzu geeignete Zellen zumindest in gewissem Maße wieder aufgeladen werden.

Ein weiteres Problem besteht bei einem Stellantrieb, dessen Rotations-Linear-Umsetzungstrieb selbsthemmungsfrei ist. Hier wird zwischen dem Antriebsmotor und dem Stellglied ein Schritt- oder Schaltgetriebe derart angebracht, dass eine Verschiebung des Stellglieds im Ruhezustand des Antriebsmotors im Wesentlichen unmöglich ist. Hier kann der Gesamtwirkungsgrad des Stellantriebs dadurch erheblich gesteigert werden, dass die Haltefunktion des Stellglieds nicht durch einen stark hemmenden oder gar selbsthemmenden Spindeltrieb oder dergleichen, sondern über ein kinematisches Schritt- oder Schaltgetriebe erreicht wird, welches nur durch den Antriebsmotor betätigbar ist, bei Beaufschlagung mit einer Kraft oder einem Moment von dem Stellglied her jedoch sperrt. Ein derartiges Schritt- oder Schaltgetriebe erzeugt zwar im Betrieb bei Betätigung des Stellglieds zusätzliche Reibverluste, diese liegen jedoch deutlich unter denen eines stark hemmenden oder gar selbsthemmenden Rotations-Linear-Umsetzungstriebs.

Das Schritt- oder Schaltgetriebe ist dabei vorzugsweise als ein innen- oder außengesteuertes Maltesergetriebe, ein Triebstockgetriebe oder ein Schaltgetriebe mit Zylindersperre ausgebildet. Diese Schritt- oder Schaltgetriebe weisen einen hohen Wirkungsgrad auf und verhindern gleichzeitig zuverlässig, dass das Stellglied in der Ruhestellung des Antriebsmotors unerwünscht aus seiner vorbestimmten Position bewegt wird.

Das Untersetzungsgetriebe kann bei einem erfindungsgemäßen Stellantrieb eine Untersetzung von bspw. zwischen 200 und 1000 aufweisen. Dadurch wird erreicht, dass die auf das Stellglied einwirkenden Kräfte auf der Motorseite des Untersetzungsgetriebes nur sehr geringe Drehmomente erzeugen, die schon mit kleinen Brems- oder Haltemomenten aufgefangen werden können.

Da bei einem Stellantrieb gemäß der vorliegenden Erfindung auf einen stark hemmenden oder gar selbsthemmenden Spindeltrieb als Rotations-Linear-Umsetzungstrieb verzichtet wird, können zur Umsetzung der Rotationsbewegung des Antriebsmotors in eine Translationsbewegung des Stellgliedes bspw. eine Schubkurbel, ein Zahnsegmenthebel, ein Exzenter, Nocken, eine Nockenscheibe, eine Spiralscheibe, eine Wendel, eine Zahnstange und/oder eine selbsthemmungsfreie Spindel eingesetzt werden. Die Spindel hat dabei vorzugsweise eine Steigung von etwa 30 bis 40 Grad, wodurch ein Wirkungsgrad von 70 bis 80 % erreicht werden kann. Andere Rotations-Linear-Umsetzungstriebe, wie eine Schubkurbel oder eine Zahnstange, erreichen sogar noch höhere Wirkungsgrade von über 90 %.

Nach einer bevorzugten Ausführungsform ist das Stellglied mit einem Ventilteller eines Heizkörperventils verbunden. Das Stellglied oder der Ventilteller können dabei von einer Feder gegen die Schließrichtung des Ventils beaufschlagt sein.

Die Erfindung wird nachfolgend anhand von Ausführungsbeispielen und der Zeichnung näher beschrieben. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: eine erste Ausführungsform des Stellantriebs mit einer Exzenterschubkurbel,
- Fig. 2: Eine zweite Ausführungsform des Stellantriebs mit einem Stirnradumlenkhebel,
- Fig. 3: eine dritte Ausführungsform des Stellantriebs mit einem Stirnrad-Spiralscheibenantrieb,
- Fig. 4: eine vierte Ausführungsform des Stellantriebs mit einem Planeten-Wendelantrieb,
- Fig. 5: eine Einrichtung zum Erzeugen eines Brems- oder Haltemoments,
- Fig. 6: eine weitere Einrichtung zum Erzeugen eines Brems- oder Haltemoments,
- Fig. 7a, 7b: eine weitere Einrichtung zum Erzeugen eines Brems- oder Haltemoments,
- Fig. 8: ein Stellantrieb mit innengesteuertem Maltesergetriebe,
- Fig. 9: eine Ansicht des Stellantriebs gemäß Fig. 8, gesehen in Richtung des Pfeils IX,
- Fig. 10: ein Stellantrieb mit einem außengesteuerten Maltesergetriebe,
- Fig. 11: eine Ansicht des Stellantriebs gemäß Fig. 10, gesehen in Richtung des Pfeils XI,
- Fig. 12: ein Stellantrieb mit Triebstockgetriebe,
- Fig. 13: ein Stellantrieb mit Schaltgetriebe, und
- Fig. 14: eine Ansicht des Stellantriebs gemäß Fig. 13, gesehen in Richtung des Pfeils XIV.

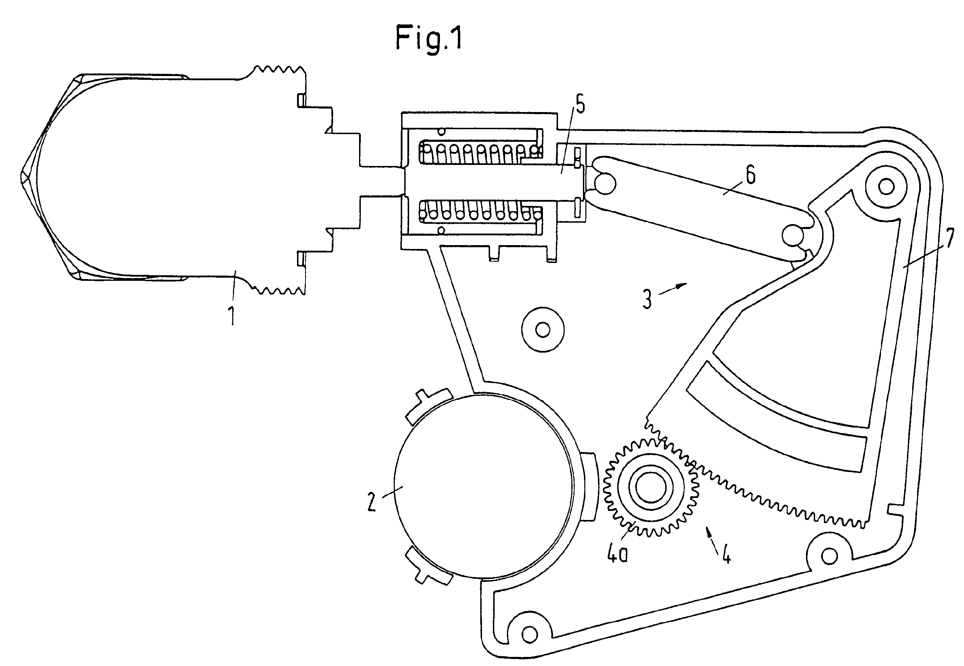

In den Figuren 1 bis 4 und 8 bis 14 sind verschiedene Ausführungsformen eines Stellantriebs für ein Heizkörperventil 1 dargestellt, der jeweils einen Antriebsmotor 2 aufweist, welcher über einen Rotations-Linear-Umsetzungstrieb 3 und ein Untersetzungsgetriebe 4 mit einem Stellglied 5 verbunden ist. In der in Fig. 1 gezeigten Ausführungsform ist das Stellglied 5 an einer Schubstrebe 6 angelenkt, die mit einem Zahnsegment 7 verbunden ist. Das Zahnsegment 7 steht mit einem von dem Antriebsmotor 2 betätigbaren Zahnrad 4a des Untersetzungsgetriebes 4 in Eingriff und bildet mit der Schubstrebe 6 eine Kurbelkinematik, welche die Drehbewegung des Antriebsmotors 2 in eine Längsbewegung des Stellglieds 5 umsetzt.

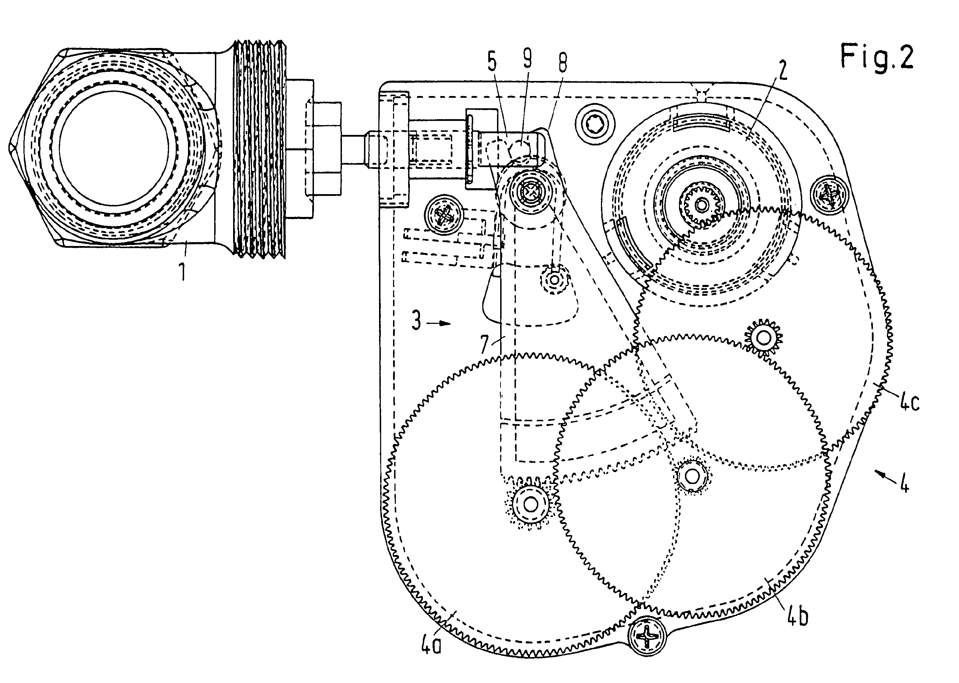

In Fig. 2 ist ein dem Stellantrieb gemäß Fig. 1 ähnlicher Stellantrieb für ein Heizkörperventil 1 dargestellt. Über den Antriebsmotor 2 werden mehrere Zahnräder 4a, 4b und 4c des Untersetzungsgetriebes 4 angetrieben. Das Zahnrad 4a steht dabei mit Zahnsegment 7 in Eingriff, welches in dem Gehäuse des Stellantriebs schwenkbar gelagert ist. Auf der dem Zahnrad 4a abgewandten Seite des Zahnsegments 7 ist eine gabelartige Aufnahme 8 für einen Zapfen 9 ausgebildet, der auf dem Stellglied 5 vorgesehen ist. Das Zahnsegment 7 mit der Aufnahme 8 bildet auf diese Weise den Rotations-Linear-Umsetzungstrieb 3, der die Drehbewegung des Antriebsmotors 2 in eine Translationsbewegung des Stellgliedes 5 umsetzt.

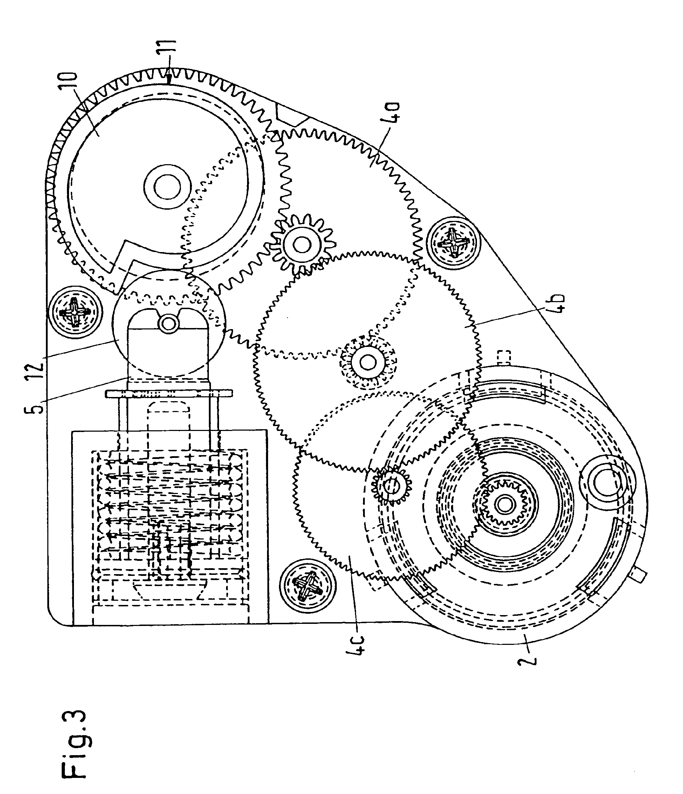

Eine weitere Ausführungsform eines Stellantriebs ist in Fig. 3 dargestellt. Der Antriebsmotor 2 ist bei dieser Ausführungsform über Zahnräder 4a, 4b und 4c des Untersetzungsgetriebes 4 mit einer Spiralscheibe 10 verbunden. Diese weist eine spiralförmige Anlagefläche 11 als eine um den Drehpunkt der Spiralscheibe 10 aufgewickelte schiefe Ebene auf, an der eine mit dem Stellglied 5 verbundene Rolle 12 anliegt. Die Spiralscheibe 10 bildet somit zusammen mit der Rolle 12 den Rotations-Linear-Umsetzungstrieb 3, der die Drehbewegung des Antriebsmotors 2 in eine Translationsbewegung des Stellglieds 5 umwandelt.

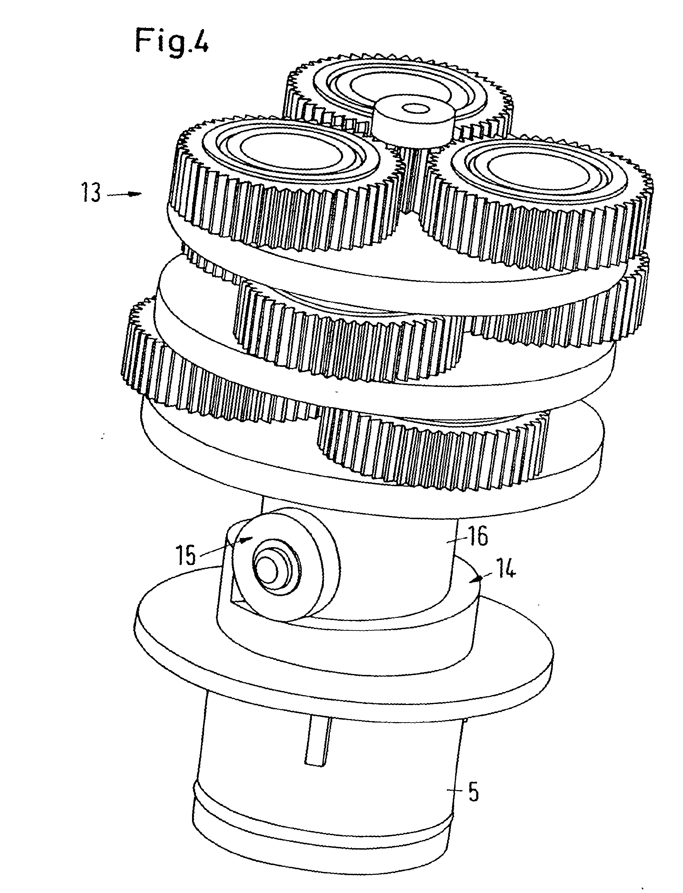

Die in Fig. 4 gezeigte Ausführungsform eines Stellantriebs weist ein Planetengetriebe 13 zur Untersetzung der Antriebsdrehzahl des nicht dargestellten Antriebsmotors auf. An dem Stellglied 5 ist eine Wendel 14 in Form einer schraubenlinienförmig um den Umfang aufgewickelten schiefen Ebene ausgebildet. Die Wendel 14 steht dabei mit einer Rolle 15 in Kontakt, die rechtwinklig zu der Achse einer von dem Planetengetriebe 13 angetriebenen Welle 16 angeordnet ist. Durch eine Bewegung der Rolle relativ zu der Wendel 14 wird die Rotation der Welle 16 in eine Translationsbewegung des Stellglieds 5 umgewandelt, so dass die Rolle 15 gemeinsam mit der Wendel 14 den Rotations-Linear-Umsetzungstrieb 3 bildet. Anstelle des Planetengetriebes 13 kann bei einem derartigen Stellantrieb auch ein bspw. in den Fig. 1 bis 3 gezeigtes Stirnradgetriebe 4 zur Untersetzung eingesetzt werden.

Bei einem Stellantrieb nach den Fig. 1 bis 4 wirken auf das Stellglied 5 Federkräfte einer nicht dargestellten Druckfeder oder Kräfte aus dem Differenzdruck in dem Heizkörperventil. Um das Stellglied 5 im Ruhezustand des Antriebsmotors 2, d.h. wenn dieser nicht betätigt wird, in seiner eingestellten Position zu halten, müssen in dem Rotations-Linear-Umsetzungstrieb 3, dem Untersetzungsgetriebe 4 und/oder in dem Antriebsmotor 2 Brems- oder Haltemomente aufgebracht werden. Aufgrund der Untersetzung in dem Untersetzungsgetriebe 4 sind die von dem Rotations-Linear-Umsetzungstrieb 3 aus den auf das Stellglied 5 wirkenden Kräften erzeugten Momente an der Welle des Antriebsmotors 2 sehr viel kleiner als direkt am Rotations-Linear-Umsetzungstrieb 3. Daher ist es in Abhängigkeit des eingesetzten Antriebsmotors 2 in einigen Fällen möglich, dass die erforderlichen Brems- oder Haltemomente durch in dem magnetischen Kreis des Antriebsmotors erzeugte Rastmomente aufgebracht werden. Falls die vom Antriebsmotor 2 in seinem Ruhezustand erzeugten Brems- oder Haltemomente nicht ausreichend sind, um eine Verschiebung des Stellglieds 5 zu verhindern, kann zusätzlich eine Einrichtung 17 zum Erzeugen eines Brems- oder Haltemoments oder ein die Bewegung des Stellglieds sperrendes Schritt- oder Schaltgetriebe in dem Stellantrieb vorgesehen werden.

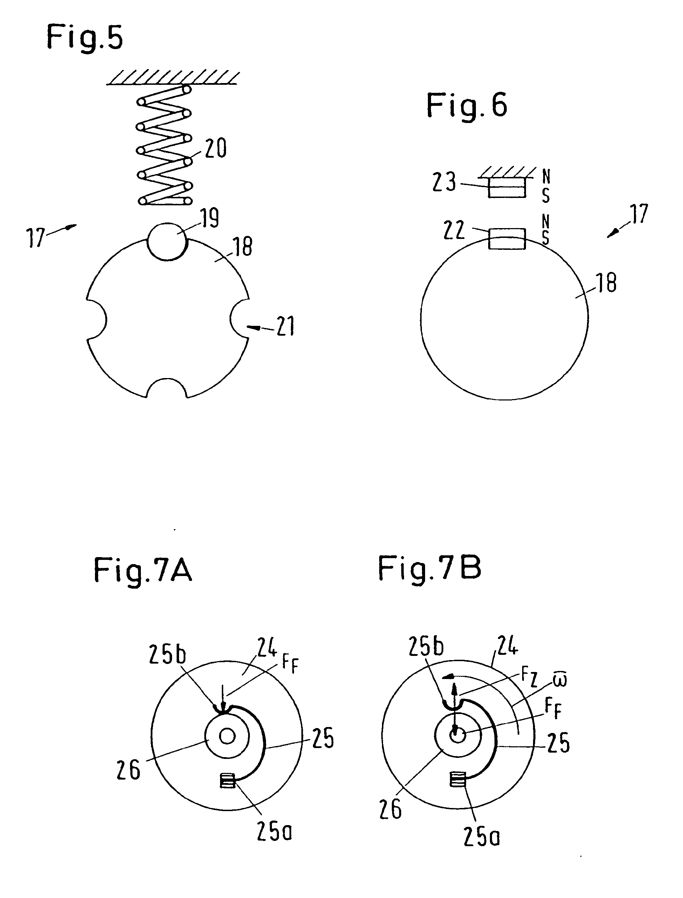

In Fig. 5 ist eine derartige Einrichtung 17 zum Erzeugen eines Brems- oder Haltemoments dargestellt, die mit einer motorseitigen Welle 18 zusammenwirkt. Die Einrichtung 17 umfasst dabei eine Rastkugel 19, die von einer Feder 20 in Richtung auf die Welle 18 beaufschlagt wird. In der Welle 18 sind mehrere Vertiefungen 21 ausgebildet, in die die Kugel 19 eingreifen kann.

Bei einem Stellantrieb nach den Fig. 1 bis 4 erzeugt die Einrichtung 17 im Ruhezustand des Antriebsmotors 2 ein Brems- oder Haltemoment, indem die Kugel 19 in eine der Ausnehmungen 21 eingreift. Wird der Antriebsmotor 2 jedoch betätigt, überwindet das Antriebsdrehmoment das Brems- oder Haltemoment, so dass die Kugel 19 aus der Ausnehmung 21 herausgedrückt wird und die Welle 18 im Wesentlichen frei drehen kann. Erst beim Abschalten des Antriebsmotors 2, d.h. wenn dieser wieder in seinen Ruhezustand versetzt wird, wird durch das Eingreifen der Kugel 19 in eine der Ausnehmungen 21 der Welle 18 wieder ein Brems- oder Haltemoment erzeugt, so dass ein Verdrehen der Welle 18 und damit eine Bewegung des Stellglieds 5 unterbunden wird.

In Fig. 6 ist eine weitere Ausführungsform einer Einrichtung 17 zum Erzeugen eines Brems- oder Haltemoments dargestellt. In der motorseitigen Welle 18 ist hierzu ein erster Rastmagnet 22 eingesetzt, dem ein zweiter ortsfester Magnet 23 zugeordnet ist. Die beiden Magneten 22 und 23 sind dabei so zueinander angeordnet, dass sie sich gegenseitig anziehen. Bei einer Annäherung des mit der Welle 18 umlaufenden Rastmagneten 22 an den ortsfesten Magneten 23 wird auf diese Weise ein Brems- und Haltemoment erzeugt, welches im Ruhezustand des Antriebsmotors 2 eine Rotation der Welle 18 und damit eine Bewegung des Stellglieds 5 unterbindet.

Eine weitere Ausführungsform einer Einrichtung 17 zum Erzeugen eines Brems- oder Haltemoments ist in den Figuren 7a und 7b schematisch dargestellt. Eine mit einer motorseitigen Welle umlaufende Scheibe 24 trägt eine im Wesentlichen U-förmige Feder 25. Die Feder 25 ist dabei mit einem ersten Ende 25a fest mit der Scheibe 24 verbunden, während das andere, freie Ende 25b unter Vorspannung an einem feststehenden Wellenzapfen 26 oder dgl. anliegt. Auf diese Weise wird zwischen dem freien Ende 25b der Feder 25 und dem Wellenzapfen 26 ein Reibschluss erzeugt, so dass die Feder 25 ein Brems- oder Haltemoment auf die Scheibe 24 und die damit verbundene motorseitige Welle ausübt.

Wird die Scheibe 24 nun, wie in Fig. 7b gezeigt, durch den nicht dargestellten Antriebsmotor 2 in Rotation versetzt, läuft auch die Feder 25 mit der Scheibe 24 um. Aufgrund der auf das freie Ende 25b der Feder 25 wirkenden Fliehkräfte, löst sich dieses von dem feststehenden Wellenzapfen 26, so dass das Brems- oder Haltemoment abnimmt oder sogar ganz aufgehoben wird. Im Ruhezustand des Antriebsmotors, d.h. wenn die Scheibe 24 wieder stillsteht, wird das freie Ende 25b der Feder 25, wie in Fig. 7a dargestellt, wieder gegen den Wellenzapfen 26 zur Erzeugung eines Brems- oder Haltemoments angepresst. Die Einrichtung aus umlaufender Scheibe 24, Feder 25 und feststehendem Wellenzapfen 26 bildet somit eine in Abhängigkeit der Drehzahl des Antriebsmotors öffnende Bremse.

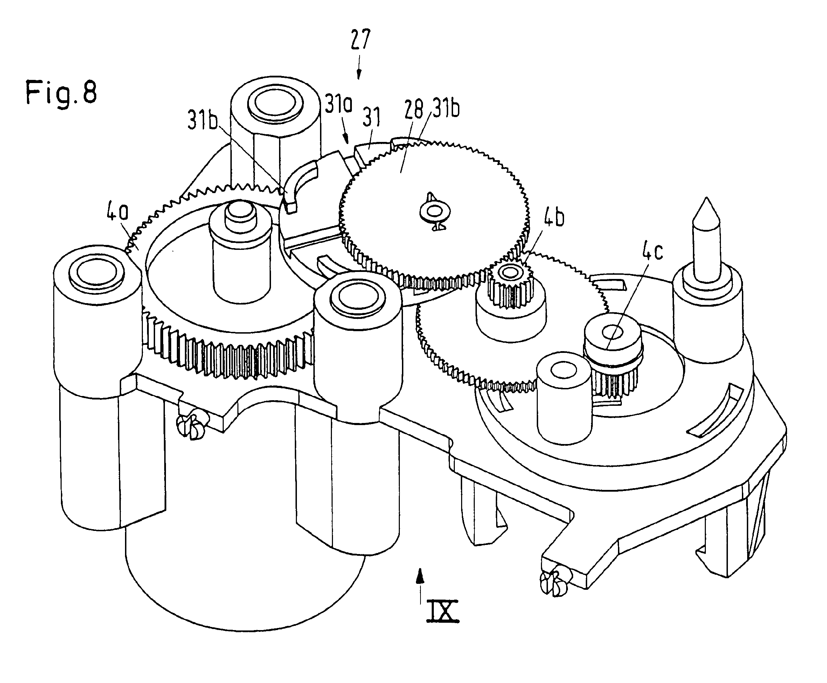

Alternativ oder zusätzlich zu einer Einrichtung 17 zum Erzeugen eines Brems- oder Haltemoments nach den Fig. 5 bis 7b kann in dem Untersetzungsgetriebe 4 ein Schritt- oder Schaltgetriebe, wie es unter Bezugnahme auf die Fig. 8 bis 14 im Folgenden beschrieben wird, integriert sein. Ein derartiges Schritt- oder Schaltgetriebe überträgt zwar in beiden Drehrichtungen ein Moment von einem ersten auf ein zweites Element. Umgekehrt lässt sich von dem zweiten Element ein Moment jedoch nicht auf das erste Element übertragen. In einem Stellantrieb wird das Schritt- oder Schaltgetriebe so angeordnet, dass der Antriebsmotor 2 das Stellglied 5 über das Untersetzungsgetriebe 4 und den Rotations-Linear-Umsetzungstrieb 3 in beiden Drehrichtungen betätigen kann, eine auf das Stellglied 5 aufgebrachte Kraft jedoch nicht als Moment bis in den Antriebsmotor 2 geleitet wird, da das Schritt- oder Schaltgetriebe in dieser Übertragungsrichtung sperrt.

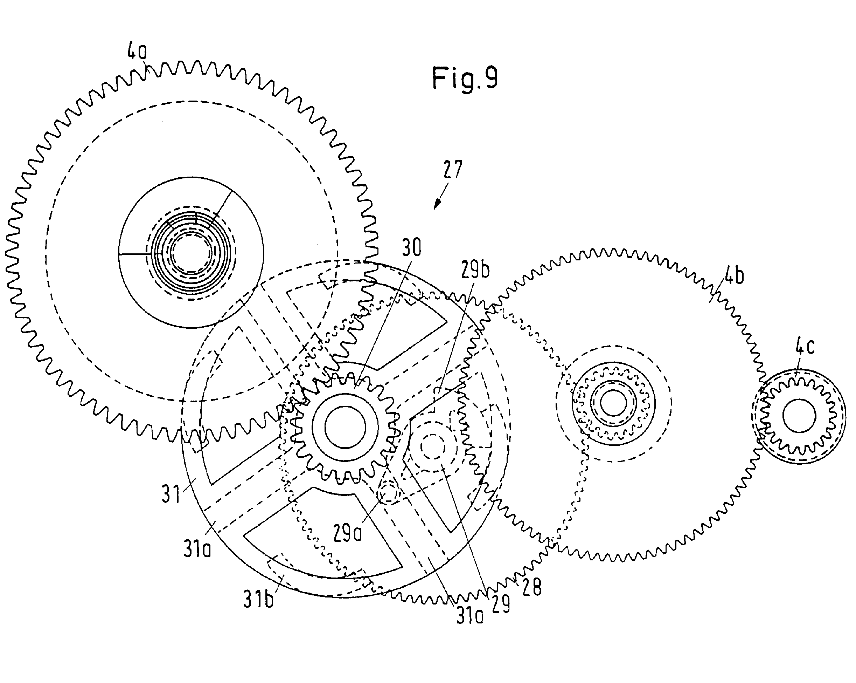

Fig. 8 und 9 zeigen einen Stellantrieb mit einem Untersetzungsgetriebe 4, in das ein innengesteuertes Maltesergetriebe 27 integriert ist. In Fig. 8 ist eine Trägerplatte mit einer Aufnahme für den nicht dargestellten Antriebsmotor 2 vorgesehen, auf welcher die Zahnräder 4a, 4b und 4c des Untersetzungsgetriebes 4 drehbar gelagert sind. Auf einem Zahnrad 28, welches mit dem Zahnrad 4b in Eingriff steht, ist eine Kurbel 29 drehfest angeordnet. Die Kurbel 29 trägt einen Zapfen 29a und auf seiner dem Zapfen 29a gegenüberliegenden Seite ein kreissegmentförmiges Sperrelement 29b. Ein weiteres Zahnrad 30, das mit dem Zahnrad 4a in Eingriff steht, ist drehfest mit einem Rad 31 verbunden, welches vier radiale Schlitze 31a und vier zwischen diesen angeordnete kreisbogenförmige Sperrelemente 31b aufweist. Der Zapfen 29a der Kurbel 29 greift dabei in die Schlitze 31 a des Rades 31 ein, um das Zahnrad 30 anzutreiben. Die Sperrelemente 29b gleiten hierbei in den Sperrelementen 31b, wobei das Sperrelement 31b des Rades 31 das Sperrelement 29b der Kurbel 29 umgreift, wenn der Zapfen 29a der Kurbel 29 aus einem der Schlitze 31a des Rades 31 heraustritt.

Im Ruhezustand des in den Figuren 8 und 9 nicht dargestellten Antriebsmotors 2 verhindern die Sperrelemente 29b und 31 b, die gemeinsam eine Zylindersperre bilden, ein Verdrehen der beiden Zahnräder 28 und 30 relativ zueinander, wenn ein Drehmoment auf das Zahnrad 4a des Untersetzungsgetriebes aufgebracht wird. Demgegenüber wird im Betriebszustand des Antriebsmotors ein auf das Zahnrad 4c aufgebrachtes Drehmoment über das Maltesergetriebe 27 auf das Zahnrad 4a übertragen.

Auf diese Weise ist sichergestellt, dass im Ruhezustand des Antriebsmotors ein Betätigung des Untersetzungsgetriebes 4 maximal um eine viertel Umdrehung des Rades 31 erfolgen kann, bis nämlich der Zapfen 29a aus einem der Schlitze 31a tritt und die Zylindersperre ein weiteres Verdrehen unmöglich macht. Kräfte, die im Ruhezustand des Antriebsmotors auf das in den Figuren 8 und 9 nicht dargestellte Stellglied wirken, können daher nicht bis in den Antriebsmotor weitergeleitet werden.

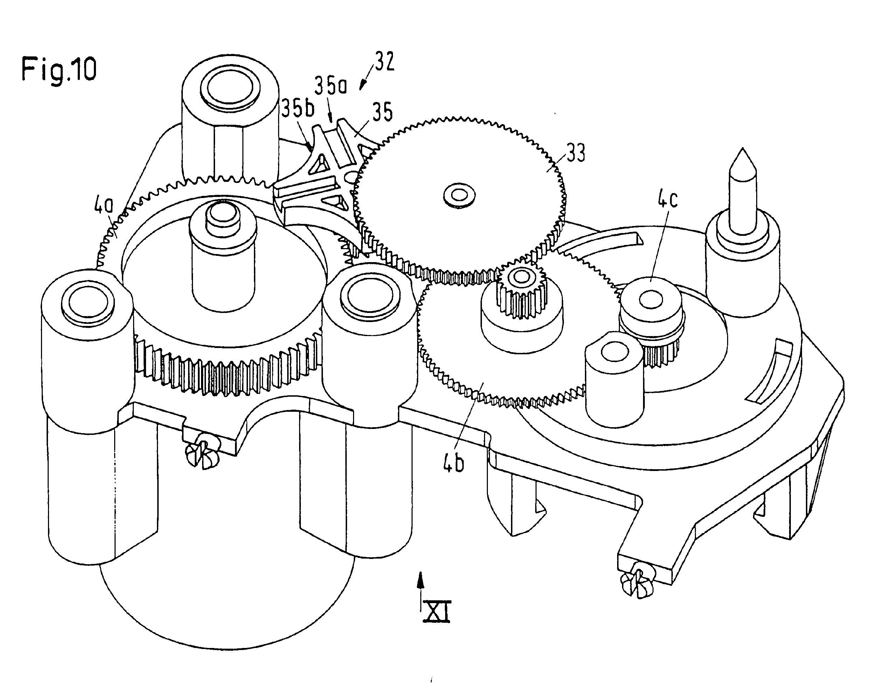

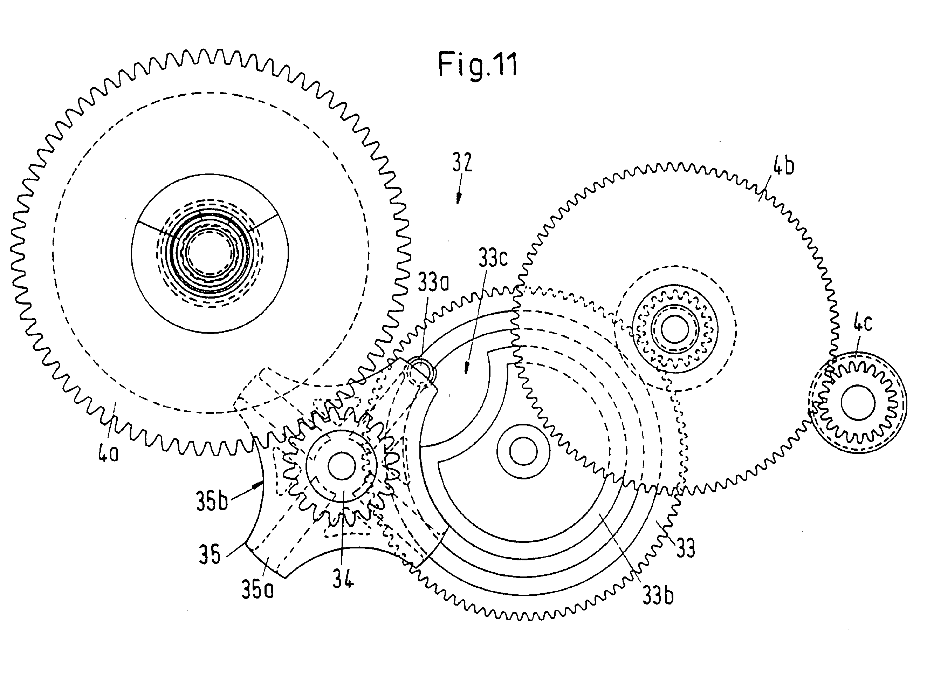

In den Figuren 10 und 11 ist ein weiterer Stellantrieb dargestellt, der im Wesentlichen dem unter Bezugnahme auf die Figuren 8 und 9 beschriebenen Ausführungsbeispiel entspricht. Zwischen den Zahnrädern 4b und 4a des Untersetzungsgetriebes 4 ist dabei jedoch ein außengesteuerte Maltesergetriebe 32 zwischengeschaltet. Das außengesteuerte Maltesergetriebe 32 weist ein mit dem Zahnrad 4b des Untersetzungsgetriebes 4 in Eingriff stehendes Zahnrad 33 auf, welches einen Zapfen 33a und ein Sperrelement 33b trägt. Das Sperrelement 33b besteht dabei aus einer Kreisscheibe mit einer konkaven Ausnehmung 33c. Mit dem Zahnrad 4a des Untersetzungsgetriebes 4 steht ein weiteres Zahnrad 34 in Eingriff, welches ein kreuzförmiges Element 35 trägt. In dem kreuzförmigen Element 35 sind vier radiale Schlitze 35a zur Aufnahme des Zapfens 33a ausgebildet. Zwischen den Schlitzen 35a erstreckt sich eine kreisbogenförmige Anlagefläche 35b, deren Krümmungsradius etwa dem des Sperrelements 33b entspricht.

Im Betriebszustand des in den Figuren 10 und 11 nicht dargestellten Antriebsmotors wird über die Zahnräder 4c und 4b das Zahnrad 33 in Rotation versetzt, wobei der Zapfen 33a in einem der Schlitze 35a des kreuzförmigen Elements 35 gleitet und dadurch das Zahnrad 34 und das damit in Eingriff stehende Zahnrad 4a antreibt. Die Anlagefläche 35b des kreuzförmigen Elements 35 gleitet dabei am Außenumfang des Sperrelements 33b, wobei das Ende eines Schlitzes 35a in die konkave Ausnehmung 33c eingreifen kann. Im Ruhezustand des Antriebsmotors kann jedoch ein Drehmoment von dem Zahnrad 4a nicht auf das Zahnrad 4c übertragen werden, wenn der Zapfen 33a nicht im Eingriff mit einem der Schlitze 35a ist, da die aneinander anliegenden Sperrflächen 33b und 35b als Zylindersperre ein Verdrehen der Zahnräder 33 und 34 zueinander verhindern.

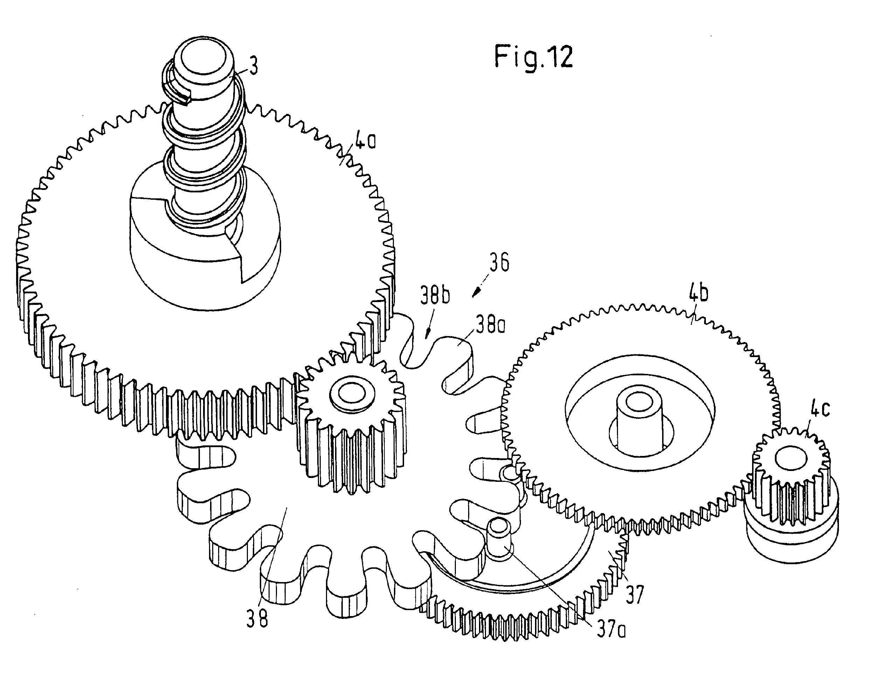

In Fig. 12 ist ein weiterer Stellantrieb dargestellt, bei welchem der Rotations-Linear-Umsetzungstrieb 3 in Form einer Spindel ausgebildet ist. In dem Untersetzungsgetriebe 4, das zwischen dem nicht dargestellten Antriebsmotor und dem Rotations-Linear-Umsetzungstrieb 3 zwischengeschaltet ist, ist ein Triebstockgetriebe 36 integriert. Das Triebstockgetriebe 36 weist ein erstes Zahnrad 37, welches mit dem Zahnrad 4b in Eingriff steht und zwei Zapfen 37a trägt, die ein Zahnrad mit zwei Zähnen bilden. Weiter weist das Triebstockgetriebe 36 ein zweites Zahnrad 38 auf, das mit dem Zahnrad 4a in Eingriff steht. Das Zahnrad 38 weist an seinem Umfang verteilt zwischen zahnartigen Vorsprüngen 38a Ausnehmungen 38b auf, die zum Eingriff der Zapfen 37a ausgebildet sind.

Im Betriebszustand des in Figur 12 nicht dargestellten Antriebsmotors wird über die Zahnräder 4c und 4b das Zahnrad 37 in Rotation versetzt. Die Zapfen 37a, die im gleichen Abstand zu der Rotationsachse des Zahnrads 37 angeordnet sind, greifen dadurch in die Ausnehmungen 38b des Zahnrades 38 ein und treiben dieses an. Auf diese Weise wird über das Zahnrad 38 auch das Zahnrad 4a, das mit der Spindel verbunden ist, angetrieben. Bei jeder Umdrehung des Zahnrades 37 sind zwei Totpunkte zu durchlaufen, in denen die Zapfen 37a die gleiche Entfernung zu der Achse des Zahnrads 38 aufweisen. Die zwischen den Zahnrädern 37 und 38 wirkenden Kräfte haben in diesen Totpunkten keinen Hebelarm, da sie in einer Richtung senkrecht zu der Achse des Zahnrades 37 wirken. Diese Totpunkte können im Betrieb durch den Antriebsmotor überwunden werden, führen jedoch dazu, dass im Ruhezustand des Antriebsmotors das Rad 38 allenfalls bis zu Erreichen eines der beiden Totpunkte zurückgedreht werden kann. Auf diese Weise wird verhindert, dass Drehmomente, die durch auf das nicht dargestelltes Stellglied wirkende Kräfte erzeugt werden, auf das motorseitige Zahnrad 4c übertragen werden können.

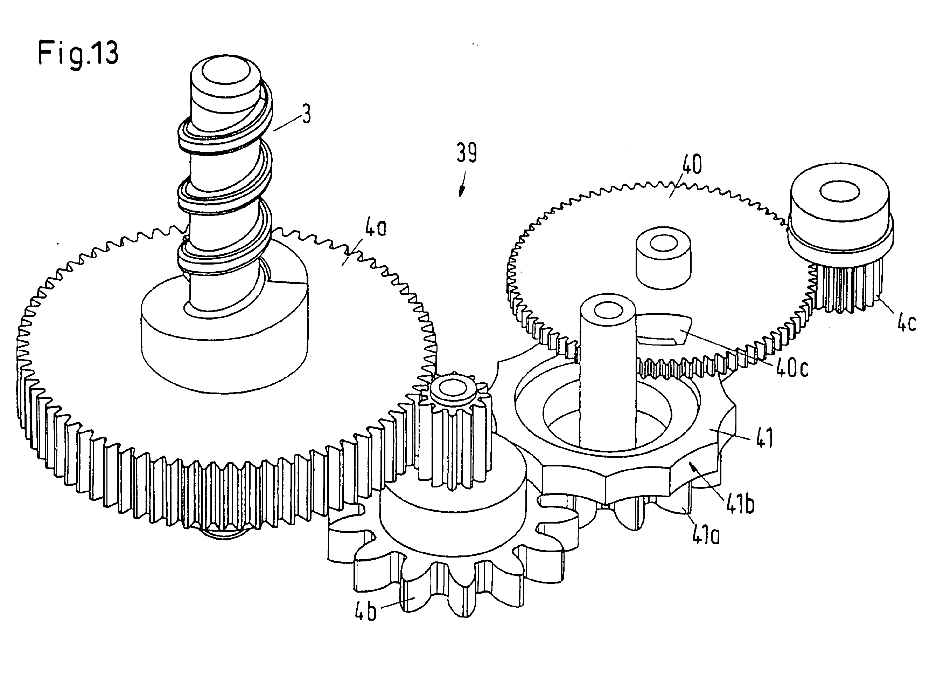

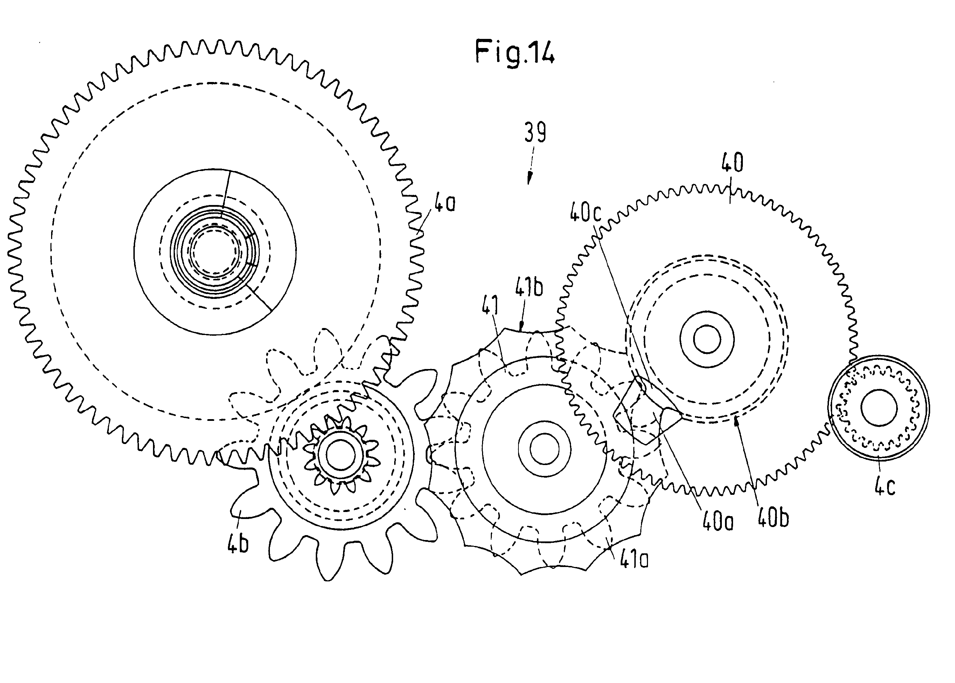

In den Figuren 13 und 14 ist ein weiterer Stellantrieb mit einem Untersetzungsgetriebe 4 und einem als Spindel ausgebildeten Rotations-Linear-Umsetzungstrieb 3 dargestellt. Zwischen dem motorseitigen Zahnrad 4c und dem abtriebsseitigen Zahnrad 4a ist ein Schaltgetriebe 39 integriert. Das Schaltgetriebe 39 weist ein erstes Zahnrad 40 mit einem einzelnen Zahn 40a und einer kreisscheibenförmigen Sperrfläche 40b auf. Ein weiteres Zahnrad 41, das mit dem Zahnrad 4b in Eingriff steht, weist mehrere Zähe 41a zum Eingriff mit dem einzelnen Zahn 40a sowie den Zähnen 41a zugeordnete konkave Sperrflächen 41b auf, deren Krümmungsradius dem der kreisscheibenförmigen Sperrfläche 40b entspricht. Das Zahnrad 41 ist dabei so zu dem Zahnrad 40 angeordnet, dass eine konkave Sperrfläche 41b an der kreisförmigen Sperrfläche 40b anliegt, so dass ein Verdrehen des Zahnrades 41 durch die Sperrflächen 40b und 41b verhindert wird. Im Bereich des einzelnen Zahnes 40a ist eine fensterartige Ausnehmung 40c in der kreisscheibenförmigen Sperrfläche 40b vorgesehen, die so bemessen ist, dass die zwischen zwei benachbarten konkaven Sperrflächen 41b ausgebildete Ecke die kreisförmige Sperrfläche 40b passieren kann. Folglich kann das Zahnrad 41 nur dann gedreht werden, wenn der Zahn 40a mit einem der Zähne 41 in Eingriff ist und die Ecke zwischen zwei konkaven Sperrflächen 41b in der Ausnehmung 40c die kreisscheibenförmige Sperrfläche 40b passieren kann. Auf diese Weise ist es möglich, dass im Betriebszustand, wenn das Zahnrad 40 über das Zahnrad 4c von dem nicht dargestellten Antriebsmotor in eine beliebige Richtung angetrieben wird, das Zahnrad 41 schrittweise bewegt wird und dadurch das Zahnrad 4a sowie die Spindel 3 antreibt. Im Ruhezustand des Antriebsmotors verhindern jedoch die aneinander anliegenden Sperrflächen 41b und 40b, die als eine Zylindersperre zusammenwirken, eine Verdrehung des Zahnrads 41.

Neben der in den Fig. 13 und 14 gezeigten Gestaltung des Schaltgetriebes 39 mit nur einem Zahn 40a ist es möglich auch mehrere Zähne 40a und entsprechende fensterartige Ausnehmungen 40c an dem Zahnrad 40 vorzusehen.

Das Übersetzungsverhältnis des Untersetzungsgetriebes 4 beträgt in Abhängigkeit der an dem Stellglied 5 auftretenden Kräfte etwa 200 bis 1000. Bei Verwendung einer Spindel als Rotations-Linear-Umsetzungstrieb 3 sollte deren Steigung bei etwa 37° liegen, um den Wirkungsgrad des Stellantriebs zu optimieren. Dabei kann statt einer Spindel auch ein beliebiger anderer Rotations-Linear-Umsetzungstrieb, bspw. wie in den Fig. 1 bis 4 dargestellt, eingesetzt werden.

### Bezugszeichen

- 1: Heizkörperventil
- 2: Antriebsmotor
- 3: Rotations-Linear-Umsetzungstrieb
- 4: Untersetzungsgetriebe
- 4a - 4c: Zahnräder
- 5: Stellglied
- 6: Schubstrebe
- 7: Zahnsegment
- 8: Gabel
- 9: Zapfen
- 10: Spiralscheibe
- 11: Anlagefläche
- 12: Rolle
- 13: Planetengetriebe
- 14: Wendel
- 15: Rolle
- 16: Welle
- 17: Einrichtung zum Erzeugen eines Brems- oder Haltemoments
- 18: Welle
- 19: Rastkugel
- 20: Feder
- 21: Ausnehmung
- 22,23: Rastmagnet
- 24: Scheibe
- 25: Feder
- 26: Wellenzapfen
- 27: Maltesergetriebe
- 28: Zahnrad
- 29: Kurbel
- 29a: Zapfen
- 29b: Sperrfläche
- 30: Zahnrad
- 31: Rad
- 31 a: Schlitz
- 31 b: Sperrfläche
- 32: Maltesergetriebe
- 33: Zahnrad
- 33a: Zapfen
- 33b: Sperrelement
- 33c: konkave Ausnehmung
- 34: Zahnrad
- 35: kreuzförmiges Element
- 35a: Schlitz
- 35b: konkave Sperrfläche
- 36: Triebstockgetriebe
- 37: Zahnrad
- 37a: Zapfen
- 38: Zahnrad
- 38a: zahnartiger Vorsprung
- 38b: Ausnehmung
- 39: Schaltgetriebe
- 40: Zahnrad
- 40a: Zahn
- 40b: kreisscheibenförmige Sperrfläche
- 40c: fensterartige Ausnehmung
- 41: Zahnrad
- 41 a: Zahn
- 41 b: konkave Sperrfläche

## Patentansprüche

1. Stellantrieb, insbesondere für ein Heizkörperventil (1),
mit einem Antriebsmotor (2), der in seinem Ruhezustand zumindest kleine Brems- oder Haltemomente erzeugt und
der mit einem selbsthemmungsfreien Rotations-Linear-Umsetzungstrieb (3) verbunden ist,
über den ein zumindest zeitweise mit Kräften in einer vorbekannten maximalen Größe beaufschlagtes Stellglied (5), insbesondere ein Ventilstößel, betätigbar ist, wobei der Antriebsmotor (2) mit dem Rotations-Linear-Umsetzungstrieb (3) über ein zwischengeschaltetes Untersetzungsgetriebe (4) verbunden ist,
dessen Untersetzung derart gewählt ist, dass die das Stellglied (5) beaufschlagenden Kräfte am Antriebsmotor (2) Drehmomente erzeugen, die kleiner sind als die im Ruhezustand des Antriebsmotors (2) an diesem wirkenden Brems- oder Haltemomente des Stellantriebs, wobei
an dem Antriebsmotor (2) oder motorseitig an dem Untersetzungsgetriebe (4) eine Einrichtung (17) zum Erzeugen eines zusätzlichen Brems- oder Haltemoments vorgesehen ist, **dadurch gekennzeichnet, dass**
die Einrichtung (17) zum Erzeugen eines zusätzlichen Brems- oder Haltemoments eine gesteuerte oder in Abhängigkeit der Drehzahl des Antriebsmotors (2) öffnende Bremse (24, 25) ist, und
die derart gestaltet ist, dass sie eine periodische Modulation des Brems- oder Haltemoments bewirkt.

2. Stellantrieb nach Anspruch 1, **dadurch gekennzeichnet, dass** die Einrichtung (17) zum Erzeugen des Brems- oder Haltemoments eine über eine Druckfeder (20) beaufschlagte Rastkugel (19) bzw. -rolle oder einen Rastmagneten (22, 23) aufweist.

3. Stellantrieb nach Anspruch 1, **dadurch gekennzeichnet, dass** das Schritt- oder Schaltgetriebe ein innen- oder außengesteuertes Maltesergetriebe (27, 32), ein Triebstockgetriebe (36) oder ein Schaltgetriebe (39) mit Zylindersperre aufweist.

4. Stellantrieb nach einem der vorhergehenden Ansprüche, **dadurch gekennzeichnet, dass** die Untersetzung des Untersetzungsgetriebes (4) zwischen 200 und 1000 beträgt.

5. Stellantrieb nach einem der vorhergehenden Ansprüche, **dadurch gekennzeichnet, dass** der Rotations-Linear-Umsetzungstrieb (3) eine Schubkurbel, einen Zahnsegmenthebel (7), einen Exzenter, Nocken, eine Nockenscheibe, eine Spiralscheibe (10), eine Wendel (14), eine Zahnstange und/oder eine Spindel aufweist.

6. Stellantrieb nach Anspruch 5, **dadurch gekennzeichnet, dass** die Spindel des Rotations-Linear-Umsetzungstriebs (3) eine Steigung von etwa 30° bis 40° aufweist.

7. Stellantrieb nach einem der vorhergehenden Ansprüche, **dadurch gekennzeichnet, dass** das Stellglied (5) mit einem Ventilteller eines Heizkörperventils (1) verbunden ist.

8. Stellantrieb nach Anspruch 7, **dadurch gekennzeichnet, dass** das Stellglied (5) oder der Ventilteller von einer Feder gegen die Schließrichtung des Ventils beaufschlagt ist.

## Claims

1. An actuating drive, in particular for use with a radiator valve (1), comprising a driving motor (2) which, in its state of rest, generates at least minor braking or holding moments and which is connected to a non-self-retaining rotational/linear converting means (3) via which an actuator (5), in particular, a valve tappet, is operable to which forces of a predetermined maximum intensity are at least temporarily applied, with the driving motor (2) being connected to the rotational/linear converting means (3) via an inserted reduction gear (4) the reduction of which is selected such that the forces applied to the actuator (5) generate torques on the driving motor (2) that are smaller than the braking or holding moments of the actuating drive acting on the driving motor (2) in its state of rest, with a means (17) for generating an additional braking or holding moment being provided on the driving motor (2) or on the motor-sided reduction gear (4), **characterized in that** the means (17) for generating an additional braking or holding moment is a brake (24, 25) opening in a controlled manner or in response to the speed of the driving motor (2) and being so designed as to cause a periodic modulation of the braking or holding moment.

2. An actuating drive according to claim 1, **characterized in that** the means (17) for generating the braking or holding moment comprises a locking ball (19) or roller or a locking magnet (22, 23) to which forces are applied by means of a compression spring (20).

3. An actuating drive according to claim 1, **characterized in that** the stepping or change-over mechanism comprises an internally or externally controlled Maltese-cross-type transmission (27, 32), a leaf pinion (36) or a gear-shift (39) provided with a cylindrical lock.

4. An actuating drive according to any one of the preceding claims, **characterized in that** the step-down of the reduction gear (4) is between 200 and 1000.

5. An actuating drive according to any one of the preceding claims, **characterized in that** the rotational/linear converting means (3) comprises a crank, a toothed segment lever (7), an eccentric, a cam, a cam disk, a helical disk (10), a coil (14), a toothed rack and/or a screw.

6. An actuating drive according to claim 5, **characterized in that** the screw of the rotational/linear converting means (3) has a pitch of about 30° to 40°.

7. An actuating drive according to any one of the preceding claims, **characterized in that** the actuator (5) is connected to a valve disk of a radiator valve (1).

8. An actuating drive according to claim 7, **characterized in that** forces are applied to the actuator (5) or the valve disk by a spring in a direction against the direction of closure of the valve.

## Revendications

1. Mécanisme de commande, spécialement pour une soupape de radiateur (1), comportant un moteur de commande (2) produisant dans son état de repos au moins des petits couples de freinage ou de retenue et étant relié à un convertisseur (3) rotatif-linéaire non-auto-bloquant, par l'intermédiaire duquel un organe de réglage (50), spécialement un poussoir de soupape, est opérable auquel sont appliquées au moins temporairement des forces d'une magnitude maximum prédéterminée, le moteur de commande (2) étant relié au convertisseur (3) rotatif-linéaire par l'intermédiaire d'un démultiplicateur (4) inséré, la réduction duquel étant choisie de sorte que les forces appliquées à l'organe de réglage (5) produisent des couples de rotation au moteur de commande (2) qui sont plus petits que les couples de freinage ou de retenue du mécanisme de commande agissant au moteur de commande (2) dans l'état de repos du dernier, un ensemble (17) pour produire un couple de freinage ou de retenue additionnel étant prévu au moteur de commande (2) ou au démultiplicateur (4) à côté du moteur, **caractérisé en ce que** l'ensemble (17) pour produire un couple de freinage ou de retenue additionnel est un frein (24, 25) ouvrant de manière commandée ou en dépendance de la vitesse du moteur de commande (2) et étant formé de sorte que qu'il produise une modulation périodique du couple de freinage ou de retenue.

2. Mécanisme de commande selon la revendication 1, **caractérisé en ce que** l'ensemble (17) pour produire le couple de freinage ou de retenue comporte une boule respectivement une poulie à encoches (19) ou un aimant à crans auquel sont appliquées des forces par l'intermédiaire d'un ressort à pression (20).

3. Mécanisme de commande selon la revendication 1, **caractérisé en ce que** la commande à pas ou de mise en marche comporte un mécanisme croix de Malte (27, 32) commandé à l'intérieur ou à l'extérieur, une denture en fuseaux (36) ou une commande de mise en marche (39) prévue d'un arrêt cylindrique.

4. Mécanisme de commande selon l'une des revendications précédentes, **caractérisé en ce que** la réduction du démultiplicateur (4) se monte à 200 - 1000.

5. Mécanisme de commande selon l'une des revendications précédentes, **caractérisé en ce que** le convertisseur (3) rotatif/linéaire comporte une manivelle de poussée, un levier de segment denté (7), un excentrique, une came, un disque à cames, un disque spirale (10), une hélice (14), une crémaillère et /ou une vis.

6. Mécanisme de commande selon la revendication 5, **caractérisé en ce que** la vis du convertisseur (3) rotatif/linéaire comporte un pas d'environ 30° à 40°.

7. Mécanisme de commande selon l'une des revendications précédentes, **caractérisé en ce que** le mécanisme de commande (5) est relié à un plateau de soupape d'une soupape de radiateur (1).

8. Mécanisme de commande selon la revendication 7, **caractérisé en ce que** des forces son appliquées au mécanisme de commande (5) ou au plateau de soupape par un ressort contre la direction à fermer de la soupape.
